Europäisches Patentamt

European Patent Office

Office européen des brevets

(19)

(11) Veröffentlichungsnummer: **0 354 314 B1**

## (12) EUROPÄISCHE PATENTSCHRIFT

(45) Veröffentlichungstag der Patentschrift: **04.08.93**

(51) Int. Cl.⁵: **C09C 1/24**, C04B 14/30

(21) Anmeldenummer: **89110095.0**

(22) Anmeldetag: **03.06.89**

(54) **Thermisch stabile Eisenoxidpigmente mit gamma-Eisenoxidstruktur, Verfahren zu ihrer Herstellung sowie deren Verwendung.**

(30) Priorität: **16.06.88 DE 3820499**

(43) Veröffentlichungstag der Anmeldung:
**14.02.90 Patentblatt 90/07**

(45) Bekanntmachung des Hinweises auf die
Patenterteilung:
**04.08.93 Patentblatt 93/31**

(84) Benannte Vertragsstaaten:
**DE FR GB IT NL**

(56) Entgegenhaltungen:
**FR-A- 2 449 711**

**JOURNAL OF APPLIED CHEMISTRY OF THE
U.S.S.R., Band 48, Nr. 11, November 1975, Teil
1, Seiten 2499-2501; T.V. KALINKSKAYA et al.:
"Influence of certain cations on the physicochemical and pigment properties of gammaferric oxide"**

(73) Patentinhaber: **BAYER AG**

**W-5090 Leverkusen 1 Bayerwerk(DE)**

(72) Erfinder: **Kröckert, Bernd, Dr.**
**Brauer Strasse 14**
**W-4230 Wesel(DE)**
Erfinder: **Buxbaum, Gunter, Dr.**
**Holzapfelweg 2**
**W-4150 Krefeld(DE)**
Erfinder: **Westerhaus, Axel, Dr.**
**Sollbrüggenstrasse 33**
**W-4150 Krefeld(DE)**
Erfinder: **Brunn, Horst, Dr.**
**Kemper Allee 18**
**W-4005 Meerbusch-Lang(DE)**

**Beschreibung**

Die vorliegende Erfindung betrifft temperaturbeständige isometrische Eisenoxidbraunpigmente mit $\gamma$-$Fe_2O_3$-Struktur und einer erhöhten thermischen Beständigkeit sowie Verfahren zu ihrer Herstellung und deren Verwendung.

Die größte Menge synthetischer, handelsüblicher Braunpigmente wird durch Mischen von gelben, roten und/oder schwarzen Eisenoxidpigmenten erhalten (Ullmanns Encyklopädie der technischen Chemie 4, neubearbeitete und erweiterte Auflage, Band 18, Anorganische Pigmente, 1979, S. 603). Die Anteile von Eisenoxidgelb und/oder -schwarz führen zu thermisch instabilen Produkten, so daß deren Einsatzbereich damit eingeschränkt ist. Der Hämatitanteil in den braunen Pigmenten ergibt in der Aufhellung, z. B. Mischungen mit $TiO_2$, einen unerwünschten violetten Farbton, wodurch deren Einsatzgebiet weiter eingeschränkt wird.

Durch den Einbau von Mangan in das $\alpha$-$Fe_2O_3$-Gitter (US-A 3 276 894 und DE-A 881 562) erhält man temperaturstabile Braunpigmente; allerdings bleibt in der Aufhellung der violette Farbton erhalten.

Die Herstellung von Eisen-Aluminium-Mischoxiden gemäß der DE-A 3 324 400 führt zwar zu Braunpigmenten mit guten Eigenschaften, jedoch sind die erhaltenen Mischfällungen schwer filtrierbar, wodurch ein aufwendiges Herstellungsverfahren resultiert. Darüber hinaus sind sie durch die hohe Kalzinationstemperatur kornhart und müssen intensiv gemahlen werden.

Aus der US-A 3 082 067 ist $\gamma$-$Fe_2O_3$ seit langem als Magnetpigment bekannt. In der JP-A 61-232 223 werden isometrische Braunpigmente auf Basis $\gamma$-$Fe_2O_3$ mit einem $SiO_2$-Gehalt beschrieben, die jedoch insbesondere in der Aufhellung mit $TiO_2$ einen unerwünschten Rotstich aufweisen.

$\gamma$-FeOOH wird als Echtbraun beschrieben (US 3 382 174 und US 2 560 970), jedoch zeigen handelsübliche $\gamma$-FeOOH-Pigmente einen gelb-orangen Farbton. Diese Produkte zersetzen sich bei Temperaturen oberhalb 200° C zu rotbraunem $\gamma$-$Fe_2O_3$ (US 3 082 067) und oberhalb 300° C zu rotem $\alpha$-$Fe_2O_3$ - (US 3 382 174).

Aufgabe der vorliegenden Erfindung war es nun, $\gamma$-$Fe_2O_3$-Pigmente zur Verfügung zu stellen, die die beschriebenen Nachteile nicht aufweisen. Überraschenderweise wurde nun gefunden, daß beim Tempern von feinteiligen $Fe_3O_4$-Pigmenten, die nach dem Anilinverfahren hergestellt wurden - Winnacker-Küchler, Chemische Technologie, Band 3, Anorg. Technologie II, 4. Aufl., 1983, S. 379 -, US 1 793 941 und US 1 793 942, mit einem Gehalt von 0,1 - 12 % $SiO_2$ und 0,02 - 5 % $Al_2O_3$ braune Pigmente erhalten werden, die bis 650° C thermisch stabil sind und in der Aufhellung keinen violetten Farbstich zeigen.

Gegenstand der vorliegenden Erfindung ist somit ein temperaturbeständiges isometrisches Eisenoxidbraunpigment mit $\gamma$-$Fe_2O_3$-Struktur, welches einen Gehalt von 0,1 bis 12 % $SiO_2$ und einen zusätzlichen Gehalt von 0,02 bis 5 % Al, gerechnet als $Al_2O_3$, aufweist. Diese und die folgenden Prozentangaben sind Gewichtsprozentangaben. Bevorzugt beträgt das $SiO_2$-Gehalt der erfindungsgemäßen Pigmente 1 bis 10 %.

Die Charakterisierung der erfindungsgemäßen Produkte erfolgt röntgenographisch, durch Bestimmung der Oberfläche, durch quantitative Bestimmung der $SiO_2$- und $Al_2O_3$-Gehalte und mit Hilfe der Farbmetrik. Für die Beurteilung der $TiO_2$-Aufhellungen und der in Kalksandstein eingearbeiteten Proben ist zudem eine visuelle Beurteilung notwendig. Die erfindungsgemäßen Pigmente besitzen trotz der hohen Darstellungstemperatur nach pulverdifraktrometrischer Untersuchung $\gamma$-$Fe_2O_3$-Struktur, gekennzeichnet durch die Ausbildung der Überstrukturreflexe entsprechend ASTM-Kartei Nr. 25-1402. (Bei einem Gitterabstand von 3,4 Å wird der 213-Reflex mit einer Intensität von 9,7 % gefunden und unterscheidet damit eindeutig Maghemit von Magnetit.)

Durch die Einpunktmethode nach DIN 66 131 und 66 132, BET-Methode, erhält man die spezifischen Oberflächen. Wie aus den Beispielen zu entnehmen ist, muß die Oberfläche der eingesetzten Magnetite größer 14 $m^2$/g sein, um nach der Glühung bei 400° C ein Neutralbraunpigment darzustellen.

Bevorzugt sind somit erfindungsgemäße Eisenoxidbraunpigmente, die eine BET-Oberfläche von größer als 14 $m^2$/g, vorzugsweise von größer als 18 $m^2$/g aufweisen. Die $SiO_2$-Gehalte werden naßchemisch nach DIN 55 913 (äquivalent ISO DIN 1248) ermittelt und die $Al_2O_3$-Gehalte nach der AAS-Methode.

Die Farbtöne aller Produkte sind in Alkydal® F 48, Handelsprodukt der Bayer AG, einem mittelöligen Alkydharz, bei einer Pigmentvolumenkonzentration von 10 % gemäß DIN 6174 (äquivalent ISO DIN 7724, 1 - 3 drafts) ermittelt. Für die Herstellung der Aufhellungen werden jeweils 1 Tl. Pigment und 5 Tl. $TiO_2$ des Handelsproduktes Bayer AG, R-KB-2® verwendet. Gemäß DIN 55 982 und 55 986 diente der Normalfarbwert Y als Angleichkriterium. Alle farbmetrisch ermittelten Werte beziehen sich auf die angegebenen Absolutwerte des Handelsproduktes der Bayer AG, Bayferrox® 600, die willkürlich aus den verschiedenen Abtestungen ausgewählt sind und somit nur als Bezug dienen (Tabelle).

Für die Abtestungen im Lack werden die Pigmente jeweils 7,5 s mit einer Stahlkugel in einem Dismembrator gemahlen. Der Farbton h der erfindungsgemäßen Eisenoxidpigmente liegt im Bereich

EP 0 354 314 B1

zwischen 46 und 60, bevorzugt zwischen 48 und 58 und für C* größer 20. Die erfindungsgemäßen Eisenoxidbraunpigmente zeigen eine Beständigkeit gegenüber Wasserdampf unter erhöhtem Druck.

Gegenstand dieser Erfindung ist auch ein Verfahren zur Herstellung der erfindungsgemäßen Pigmente. Das erfindungsgemäße Verfahren ist dadurch gekennzeichnet, daß nach dem Anilinverfahren erhaltene, 0,1 bis 12 % Siliciumverbindungen, vorzugsweise 1 bis 10 %, gerechnet als $SiO_2$, und zusätzlich 0,02 bis 5 % Aluminiumverbindungen, gerechnet als $Al_2O_3$ enthaltende, $Fe_3O_4$-Pigmente bei Temperaturen von 200 bis 700° C, vorzugsweise von 300 bis 600° C, unter Zutritt von Luft oder Sauerstoff bei einer Reaktionszeit von 30 min bis 24 h, vorzugsweise 1 bis 2 h getempert werden.

Es ist zweckmäßig, die Edukte zunächst bei 50 - 100° C zu trocknen und anschließend die Temperung in Kammeröfen, Drehbirnenöfen oder auch Drehrohröfen bei Temperaturen von 200 - 700° C, vorzugsweise 300 - 600° C, durchzuführen. Höhere Temperaturen führen in der Regel zu verkleinerten Sättigungswerten, wobei in Abhängigkeit des Vorproduktes ein optimaler Wert erzielt wird und eine weitere Steigerung dann zu einer Verschlechterung führt.

Je nach $SiO_2$- und $Al_2O_3$-Gehalt, 0,1 - 12 % bzw. 0,02 - 5 %, lassen sich Produkte für den Einsatz im Baustoffsektor, in Anstrichmitteln und in Kunststoffen herstellen. Gegenstand dieser Erfindung ist auch die Verwendung der erfindungsgemäßen Eisenoxidbraunpigmente zur Ergänzung von Baustoffen, die bei erhöhtem Druck und erhöhter Temperatur ausgehärtet werden, ebenso die Verwendung in Betonsteinen, insbesondere ein Gemisch mit Eisenoxidrotpigmenten gleicher Morphologie.

Nachfolgend wird die Erfindung beispielhaft beschrieben, womit keine Einschränkung auf die Beispiele zu sehen ist.

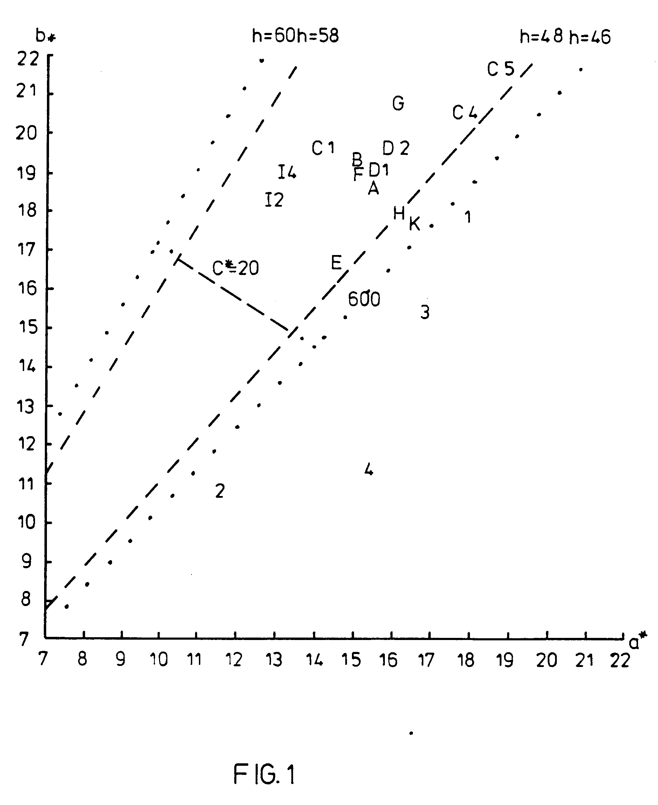

In Fig. 1 sind die erfindungsgemäßen Produkte aus den Beispielen mit ihren Absolutwerten für a* und b* eingetragen. Die Symbole bedeuten: A, B, C 1, C 4, C 5, D 1, D 2, E, F, G, H, I 2, I 4, K für die Produkte aus den Beispielen; 1, 2, 3, 4 für die Produkte aus den Vergleichsbeispielen und 600 für das Handelsprodukt der Bayer AG, Bayferrox® 600.

| | | |
|---|---|---|
| A | = | Beispiel 1 |
| B | = | Beispiel 2 |
| C1 | = | Beispiel 3 |
| C4 | = | Beispiel 3 |
| C5 | = | Beispiel 3 |
| D1 | = | Beispiel 4 |
| D2 | = | Beispiel 4 |
| E | = | Beispiel 5 |
| F | = | Beispiel 6 |
| G | = | Beispiel 7 |
| H | = | Beispiel 8 |
| I2 | = | Beispiel 9 |
| I4 | = | Beispiel 9 |
| K | = | Beispiel 10 |
| 1 | = | Vergleichsbeispiel 1 |
| 2 | = | Vergleichsbeispiel 2 |
| 3 | = | Vergleichsbeispiel 3 |
| 4 | = | Vergleichsbeispiel 4 |
| 600 | = | Bayferrox® 600, Handelsprodukt der Bayer AG |

Es ergibt sich, daß alle Pigmente im untersuchten Bereich, die im Purton einen Farbwinkel kleiner 48 aufweisen, in der Aufhellung mit $TiO_2$ den unerwünschten violetten Farbstich zeigen. Der Purton wurde in Alkydal® F 48, Handelsprodukt der Bayer AG, bestimmt.

Beispiel 1

Nach dem Anilinverfahren, wie in DE-A 2 826 941 beschrieben, wird eine Eisenoxidschwarzsuspension hergestellt. Hier gibt man zu 130 ml $FeCl_2$-Lösung (360 g/l) 70 ml $AlCl_3$-Lösung (160 g/l), 15 ml Wasser, 2 ml 96%ige $H_2SO_4$, 20 ml Nitrobenzol und 20 g gemahlene Eisenspäne, die 1,54 % Si und 0,02 % Al enthalten. Nachdem die Mischung auf 90° C gebracht worden ist, läßt man innerhalb von zwei Stunden 135 ml Nitrobenzol zulaufen. Nach erfolgter Reduktion des Nitrobenzols wird die Hauptmenge Anilin abdekantiert und die in der Eisenoxidsuspension haftenden Restmengen mit Wasserdampf ausgetrieben. Der verbleibende Eisenoxidschlamm wird nach dem Auswaschen der Restsalze mit Wasser filtriert und schließlich bei 100° C getrocknet. Das Produkt enthält 2,4 Gew.-% $SiO_2$ und 0,03 Gew.-% $Al_2O_3$ bei einer Oberfläche von 24 $m^2$/g. In einem Drehbirnenofen wird das Material nach dem Aufheizen auf 400° C noch

3

EP 0 354 314 B1

eine Stunde bei dieser Temperatur geglüht. Man erhält ein braunes Pulver, das farbmetrisch untersucht einen Winkel von h = 50 im Purton liefert und in der Aufhellung mit $TiO_2$ einen neutralbraunen Farbton zeigt und eine Oberfläche von 23 $m^2/g$ besitzt.

Beispiel 2

Der Eisenoxidschlamm nach Beispiel 1, 290 g Fe/l, mit einem $FeCl_2$-Gehalt von 66 g entsprechend 45 g Fe/l, wird innerhalb von 60 min bei 80° C unter Rühren mit 50 ml einer Aluminiumsalzlösung versetzt, 1,3 Gew.-% bezogen auf $Fe_3O_4$, und anschließend mit 10%iger Natronlauge innerhalb von 60 min von einem Anfangs-pH-Wert von ca. 3,7 auf einen End-pH-Wert von 5,5 eingestellt. Nach dem Auswaschen der Restsalze mit Wasser wird das $Fe_3O_4$ abfiltriert und bei 100° C getrocknet. Man erhält ein Edukt mit einer Oberfläche von 36 $m^2/g$, einem $SiO_2$-Gehalt von 2,6 Gew.-% und einem $Al_2O_3$-Gehalt von 1,3 Gew.-%. Es wird in einem 400° C heißen Drehbirnenofen gegeben und noch eine Stunde geglüht. Man erhält in Purton und Aufhellung ein Echtbraunpigment mit einer Oberfläche von 33 $m^2/g$.

Beispiel 3

Die bei 100° C getrockneten Magnetitproben aus Beispiel 2 werden in einem Kammerofen unter Luftzutritt jeweils 1 h bei 400° C, 500° C, 600° C, 625° C und 650° C geglüht. Alle Produkte sind in Purton und Aufhellung gute Neutralbraunpigmente.

Beispiel 4

Ein isometrischer Magnetit, hergestellt nach Beispiel 1, aber mit einem $SiO_2$-Gehalt von 2,3 Gew.-%, einem $Al_2O_3$-Gehalt von 0,27 Gew.-% und einer Oberfläche von 21 $m^2/g$ wird bei 400° C bzw. 500° C im Kammerofen geglüht. Man erhält gute Pigmente, die in Purton und Aufhellung angenehm neutralbraun sind und eine Oberfläche von 22 $m^2/g$ besitzen.

Beispiel 5

Der Magnetit entsprechend Beispiel 4 wird mit 10 % $SiO_2$ nachbehandelt. Hierzu wird eine $Fe_3O_4$-Suspension mit 150 g/l durch NaOH auf pH 9 eingestellt und dann die nötige Menge Na-Wasserglas über 2 h mit $H_2SO_4$ auf pH 7 eingestellt. Nach Filtration und Trocknung bei 60° C erhält man ein Produkt mit einer Oberfläche von 19 $m^2/g$, einem $SiO_2$-Gehalt von 9,6 Gew.-% und einem $Al_2O_3$-Gehalt von 0,3 Gew.-%. Die Glühung im Kammerofen bei 400° C ergibt ein Echtbraunpigment mit einer Oberfläche von 23 $m^2/g$.

Beispiel 6

Der isometrische Magnetit aus Beispiel 4 wird mit 6 Gew.-% $SiO_2$ und 4 Gew.-% $Al_2O_3$ nachbehandelt. Hierzu wird eine $Fe_3O_4$-Suspension mit 150 g/l durch NaOH auf pH 9 eingestellt und dann die nötige Menge Na-Wasserglas über 2 h zugegeben. Anschließend wird auf 90° C erhitzt, über 2 h mit $H_2SO_4$ auf pH 6 eingestellt und dann rasch auf pH 3. Bei konstantem pH-Wert wird ein Gemisch aus Na-Aluminat, gerechnet als 4 Gew.-% $Al_2O_3$, bezogen auf 150 g/l $Fe_3O_4$, und $H_2SO_4$ über 30 min zugegeben. Schließlich wird mit NaOH ein pH-Wert von 7 eingestellt und nach der Filtration bei 60° C getrocknet. Das nachbehandelte Produkt besitzt eine Oberfläche von 31 $m^2/g$, einen $SiO_2$-Gehalt von 5,1 Gew.-% und einen $Al_2O_3$-Gehalt von 3,2 Gew.-%. Nach der Glühung von 1 h bei 400° C im Kammerofen erhält man in Purton und Aufhellung ein neutralrehbraunes Produkt mit einer Oberfläche von 36 $m^2/g$.

Beispiel 7

Ein Magnetit aus dem Anilinverfahren, analog Beispiel 2, aber mit einer Oberfläche von 32 $m^2/g$ enthält nach der Glühung von 1 h im Kammerofen bei 400° C 1,4 Gew.-% $SiO_2$ und 2,7 Gew.-% $Al_2O_3$. Man erhält ein gutes Neutralbraunpigment mit einer Oberfläche von 27 $m^2/g$.

Beispiel 8

Ein isometrischer Magnetit, nach Beispiel 1, aber mit einem Gehalt von 2,5 Gew.-% $SiO_2$ und 0,03 % $Al_2O_3$ und einer Oberfläche von 18 $m^2/g$ wird im Kammerofen bei 400° C 1 h getempert. Man erhält ein

4

Produkt, daß im Purton neutralbraun ist und eine Oberfläche von 19 m²/g besitzt. Die visuelle Beurteilung der Aufhellung zeigt aber, daß diese violettstichig ist.

Beispiel 9

Proben des Magnetits aus Beispiel 2 werden nach dem Aufheizen 30 min, 1 h, 2 h bzw. 24 h bei 400° C im Drehbirnenofen geglüht. Alle Produkte sind in Purton und Aufhellung neutral-rehbraune Pigmente.

Beispiel 10

Ein Magnetit, nach Beispiel 1, aber mit einem Gehalt von 2,5 Gew.-% $SiO_2$, einem Gehalt von 0,02 Gew.-% $Al_2O_3$ und einer Oberfläche von 14,5 m²/g, ist nach der Glühung von 1 h bei 400° C im Kammerofen ein neutralbraunes Pigment, das, visuell beurteilt, in der Aufhellung violettstichig ist und eine Oberfläche von 14 m²/g besitzt.

Beispiel 11

Das Produkt aus Beispiel 1 wurde in Kalksandstein mit Pigmentierungshöhen von 0,2 bis 1 % eingearbeitet. Der neutralbraune Farbton bleibt sowohl bei einem Wasserdampfdruck von 16 bar über 4 h auch bei einem Wasserdampfdruck von 8 bar über 8 h bei allen Proben erhalten.

Beispiel 12

In einer Betonmischung aus 240 g Quarzsand (0,2 - 1 mm), 120 g Quarzsand (1 - 2 mm) 40 g Quarzmehl, 100 g Weißzement und 35 g Wasser werden 1,2 Gew.-% des Produktes aus Beispiel 1 sowie Gemische der Produkte aus Beispiel 1 und 10 mit den roten Eisenoxidpigmenten Bayferrox® 110 und 130 (Handelsprodukte der Bayer AG), jeweils 1,2 Gew.-% in den Verhältnissen 1 : 1, 1 : 2 und 1 : 3 vermischt. Nach der weiteren Zugabe von 35 g Wasser werden die Mischungen jeweils in einer Stahlpreßform bei 400 bar 10 s gepreßt, anschließend 24 h bei 35° C und 100 % Luftfeuchtigkeit gehärtet und schließlich weitere 24 h an der Luft ausgehärtet. Man erhält einen neutralbraunen Betonstein bzw. im Falle der Rotabmischungen ziegelrote Steine.

Vergleichsbeispiel 1

Ein Magnetit, nach Beispiel 1 dargestellt, aber mit einem $SiO_2$-Gehalt von weniger als 0,1 Gew.-%, einem $Al_2O_3$-Gehalt von weniger als 0,02 Gew.-% und einer Oberfläche von 18 m² /g ist nach der Glühung von 1 h im Kammerofen bei 400° C weder in Purton noch in der Aufhellung ein neutralbraunes Pigment mit einer Oberfläche von 19 m²/g.

Vergleichsbeispiel 2

Magnetit, nach dem Anilinverfahren in Beispiel 1 hergestellt, mit einem $SiO_2$-Gehalt von weniger als 0,1 Gew.-%, einem $Al_2O_3$-Gehalt von 0,43 Gew.-% und einer Oberfläche von 4 m²/g wird eine Stunde im Kammerofen bei 400° C geglüht. Das Produkt ist rotbraun und in der Aufhellung mit $TiO_2$ violett und besitzt eine Oberfläche von 4 m²/g.

Vergleichsbeispiel 3

Das gelb-orange handelsübliche Produkt der Bayer AG, Bayferrox® 943, mit $\gamma$-FeOOH-Struktur wird 1 h in einem Kammerofen bei 400° C geglüht. Das dabei entstehende Produkt ist rotbraun.

Vergleichsbeispiel 4

Ein Magnetit mit einer Oberfläche von 7,4 m²/g, einer Schüttdichte von 0,92 g/cm³ und einem $SiO_2$-Gehalt von 2,2 Gew.-% erfüllt die Spezifikation nach JP-A-61-232233. Die Glühung von 1 h bei 350° C führt zu einem rotbraunen Produkt mit einer Oberfläche von 7 m²/g, und die Aufhellung mit $TiO_2$ ist violett.

Tabelle

Farbmetrische Werte der Produkte aus den Beispielen bezogen auf das handelsübliche helle Eisenoxid-Mischbraun, Bayferrox® 600, Purtonauflagen. A - K kennzeichnet die Produkte aus den Beispielen bzw. 1 - 4 die Produkte aus den Vergleichsbeispielen.

|  | L* | a* | b* | C* | h |
|---|---|---|---|---|---|
| **Bezug:** | | | | | |
| Bayferrox® 600 | 37,0 | 15,7 | 15,3 | 21,9 | 44,3 |
| Beispiel 1, A | 37,7 | 15,5 | 18,8 | 24,4 | 50,5 |
| Beispiel 2, B | 38,1 | 15,1 | 19,3 | 24,5 | 51,0 |
| Beisp. 3, C 1/400° C | 38,7 | 14,2 | 19,6 | 24,2 | 54,2 |
| C 2/500° C | 39,0 | 13,9 | 20,1 | 24,8 | 54,3 |
| C 3/600° C | 39,4 | 13,5 | 20,7 | 25,5 | 54,3 |
| C 4/625° C | 39,6 | 18,0 | 20,5 | 28,6 | 49,9 |
| C 5/650° C | 39,6 | 19,0 | 21,5 | 28,7 | 48,5 |
| Beisp. 4, D 1/400° C | 37,6 | 15,6 | 19,0 | 24,5 | 50,7 |
| D 2/500° C | 38,0 | 16,0 | 19,5 | 25,2 | 50,7 |
| Beisp. 5, E | 36,1 | 14,6 | 16,7 | 22,1 | 48,9 |
| Beisp. 6, F | 37,6 | 15,2 | 19,0 | 24,3 | 51,3 |
| Beisp. 7, G | 39,0 | 16,2 | 20,7 | 26,3 | 51,9 |
| Beisp. 8, H | 37,1 | 16,2 | 18,0 | 24,2 | 48,0 |
| Beisp. 9, I 1/30 min | 38,1 | 13,0 | 18,2 | 22,3 | 54,4 |
| I 2/1 h | 38,1 | 13,0 | 18,3 | 22,4 | 54,6 |
| I 3/2 h | 38,4 | 12,9 | 18,6 | 22,6 | 55,2 |
| I 4/24 h | 38,7 | 13,3 | 19,0 | 23,2 | 55,0 |
| Beisp. 10, K | 36,7 | 16,6 | 17,7 | 24,2 | 46,9 |
| Vergleichsbeisp. 1, 1 | 37,0 | 18,0 | 17,9 | 28,4 | 44,9 |
| Vergleichsbeisp. 2, 2 | 32,7 | 11,6 | 10,8 | 15,8 | 43,1 |
| Vergleichsbeisp. 3, 3 | 35,0 | 16,9 | 15,4 | 22,7 | 42,0 |
| Vergleichsbeisp. 4, 4 | 32,3 | 15,4 | 11,3 | 19,1 | 36,4 |

**Patentansprüche**

1. Temperaturbeständiges, isometrisches Eisenoxidbraunpigment mit $\gamma$-$Fe_2O_3$-Struktur, dadurch gekennzeichnet, daß es einen Gehalt von 0,1 bis 12 Gew.-% $SiO_2$ und einen zusätzlichen Gehalt von 0,02 bis 5 Gew.-% Al, gerechnet als $Al_2O_3$, aufweist.

2. Temperaturbeständiges Eisenoxidbraunpigment gemäß Anspruch 1, dadurch gekennzeichnet, daß der $SiO_2$-Gehalt 1 bis 10 Gew.-% beträgt.

**3.** Temperaturbeständiges Eisenoxidbraunpigment gemäß einem der Ansprüche 1 oder 2, dadurch gekennzeichnet, daß es eine BET-Oberfläche von größer als 14 $m^2/g$, vorzugsweise größer als 18 $m^2/g$ aufweist.

**4.** Temperaturbeständiges Eisenoxidbraunpigment gemäß einem oder mehreren der Ansprüche 1 bis 3, dadurch gekennzeichnet, daß der Farbton h im Bereich zwischen 46 und 60, bevorzugt zwischen 48 und 58 sowie für C* größer 20 liegt.

**5.** Verfahren zur Herstellung des temperaturstabilen Eisenoxidbraunpigments gemäß einem oder mehreren der Ansprüche 1 bis 4, dadurch gekennzeichnet, daß nach dem Anilinverfahren erhaltene 0,1 bis 12 Gew.-% Siliciumverbindungen, vorzugsweise 1 - 10 Gew.-%, gerechnet als $SiO_2$, und zusätzlich 0,02 bis 5 Gew.-% Aluminiumverbindungen, gerechnet als $Al_2O_3$, enthaltende $Fe_3O_4$-Pigmente bei Temperaturen von 200 bis 700° C, vorzugsweise bei 300 bis 600° C, unter Zutritt von Luft oder Sauerstoff bei einer Reaktionszeit von 30 min bis zu 24 h, vorzugsweise 1 bis 2 h, getempert werden,

**6.** Verfahren gemäß Anspruch 5, dadurch gekennzeichnet, daß vor der Temperung eine Trocknung bei 50 bis 100° C vorgenommen wird,

**7.** Verwendung des temperaturstabilen Eisenoxidbraunpigments gemäß einem oder mehreren der Ansprüche 1 bis 6, zur Einfärbung von Baustoffen, die bei erhöhtem Druck und erhöhter Temperatur ausgehärtet werden,

**8.** Verwendung des temperaturstabilen Eisenoxidbraunpigments gemäß einem oder mehreren der Ansprüche 1 bis 6 in Betonsteinen, insbesondere im Gemisch mit Eisenoxidrotpigmenten gleicher Morphologie.

## Claims

**1.** A heat-stable isometric iron oxide brown pigment of $\gamma$-$Fe_2O_3$ structure, characterized in that it has an $SiO_2$ content of 0.1 to 12% by weight and an additional Al content, expressed as $Al_2O_3$, of 0.02 to 5% by weight.

**2.** A heat-stable iron oxide brown pigment as claimed in claim 1, characterized in that the $SiO_2$ content is from 1 to 10% by weight.

**3.** A heat-stable iron oxide brown pigment as claimed in claim 1 or 2, characterized in that it has a BET surface of greater than 14 $m^2/g$ and preferably greater than 18 $m^2/g$.

**4.** A heat-stable iron oxide brown pigment as claimed in one or more of claims 1 to 3, characterized in that the hue h is in the range from 46 to 60 and preferably in the range from 48 to 58 and for C* is > 20.

**5.** A process for the production of the heat-stable iron oxide brown pigment claimed in one or more of claims 1 to 4, characterized in that $Fe_3O_4$ pigments obtained by the aniline process containing 0.1 to 12% by weight and preferably 1 to 10% by weight silicon compounds, expressed as $SiO_2$, and in addition 0.02 to 5% by weight aluminium compounds, expressed as $Al_2O_3$, are heated in air or oxygen for 30 minutes to 24 hours and preferably for 1 to 2 hours at temperatures in the range from 200 to 700° C and preferably at temperatures in the range from 300 to 600° C.

**6.** A process as claimed in claim 5, characterized in that heating is preceded by drying at 50 to 100° C.

**7.** The use of the heat-stable iron oxide brown pigment claimed in one or more of claims 1 to 6 for coloring building materials which are cured at high temperature and pressure.

**8.** The use of the heat-stable iron oxide brown pigment claimed in one or more of claims 1 to 6 in concrete bricks, more especially in admixture with iron oxide red pigments of the same morphology.

**EP 0 354 314 B1**

**Revendications**

1. Pigment brun d'oxyde de fer isométrique, thermostable, à structure de $Fe_2O_3 \ \gamma$, caractérisé en ce qu'il présente une teneur en $SiO_2$ de 0,1 à 12 % en poids et une teneur supplémentaire en Al de 0,02 à 5 % en poids, calculée en $Al_2O_3$.

2. Pigment brun d'oxyde de fer thermostable selon la revendication 1, caractérisé en ce que la teneur en $SiO_2$ vaut de 1 à 10 % en poids.

3. Pigment brun d'oxyde de fer thermostable selon la revendication 1 ou 2, caractérisé en ce qu'il présente une surface spécifique BET de plus de 14 $m^2/g$, de préférence de plus de 18 $m^2/g$.

4. Pigment brun d'oxyde de fer thermostable selon une ou plusieurs des revendications 1 à 3, caractérisé en ce que la teinte h se situe dans un domaine compris entre 46 et 60, de préférence entre 48 et 58 même pour C* supérieur à 20.

5. Procédé de préparation du pigment brun d'oxyde de fer thermostable selon une ou plusieurs des revendications 1 à 4, caractérisé en ce que des pigments de $Fe_3O_4$ contenant 0,1 à 12 % en poids de composés du silicium, de préférence 1 à 10 % en poids, calculés en $SiO_2$ et en outre de 0,02 à 5 % en poids de composés de l'aluminium, calculés en $Al_2O_3$, obtenus par le procédé à l'aniline est étuvé à des températures de 200 à 700°C de préférence de 300 à 600°C avec entrée d'air ou d'oxygène en une durée de réaction de 30 min à 24 h, de préférence 1 à 2 h.

6. Procédé selon la revendication 5, caractérisé en ce que l'on procède avant l'étuvage à un séchage à une température de 50 à 100°C.

7. Utilisation du pigment brun d'oxyde de fer thermostable selon l'une ou plusieurs des revendications 1 à 6 pour la coloration de matériaux de construction qui sont durcis sous pression élevée et à température élevée.

8. Utilisation du pigment brun d'oxyde de fer thermostable selon l'une ou plusieurs des revendications 1 à 6 dans les pierres de béton, particulièrement en mélanges avec des pigments rouges d'oxyde de fer ayant la même morphologie.

8

FIG. 1